# EUROPEAN PATENT APPLICATION

(11) **EP 2 599 392 A1**
(43) Date of publication of application: **05.06.2013**
(21) Application number: 12386001.7
(22) Date of filing: 23.01.2012
(51) Int. Cl.: A23L 1/30, A23L 1/305

(54) **Triglyceride tolerance test meal**

(30) Priority: 02.12.2011 GR 2011100669
(71) Applicant: Dellis Medical Research Unlimited Co., 15771 Athens (GR)
(72) Inventor: Kolovou, Genovefa, 11472 Athens (GR)
(74) Representative: Marazopoulou, Vassiliki

(57) **Abstract**

With the present invention we have precisely defined postprandial measurement as one that is taken at a fixed time point 4 hours after a standardised Triglyceride Tolerance Test meal (TTTm). Screening and intervention to allow early detection of undesirable nonfasting TGs concentration may be a both useful and cost-effective tool, similarly to glucose tolerance test.

Our proposal has precised that the most convenient way for measuring TGs concentration after the TTTm is 4 hours and that an ideal standard meal contains 75g of saturated fat, 25g carbohydrates and 10g protein.

**For the above reasons we propose a TTT diagnostic meal which contains a standardized proportion of 75 gr saturated fat, 25 gr of carbohydrates and 10gr of proteins, characterized by a powder form which can be dissolved in water to form a drink or mousse that the patient can consume directly without a need for patients to be hospitalized.**

## Description

### I. INTRODUCTION - TECHNICAL FIELD OF THE INVENTION

The present invention is a standardized diagnostic meal, which consists of 75g saturated fat, 25g carbohydrates and 10g protein, and is related with a Triglyceride Tolerance Test (TTT), in order to define postprandial plasma triglycerides concentration, in humans.

### II. BACKGROUND OF THE INVENTION

CVD's Cardiovascular Diseases (CVD's) are the leading cause of death worldwide, and evidence show that they will remain the major cause of death globally during the decade 2010 - 2020.

The variable risk factors that increase the CVD are: (1) Abnormal blood lipid levels (High Total Cholesterol Levels, High LDL cholesterol levels, Low HDL cholesterol Levels), (2) Elevated triglyceride levels, (3) High blood pressure, (4) Diabetes mellitus and, (5) Unhealthy lifestyle, (smoking, physical inactivity, obesity, unhealthy diet)

The major intervention that is implemented in abnormal lipid values in order to reduce the risk of CVD is the treatment of total and LDL cholesterol levels.

All clinical and survival studies have documented that lowering the increased total and LDL cholesterol with hypolipidaemic drugs can decrease the cardiac mortality and cardiac events by 30%-40%. This means that despite efficacy of current standards of care most of the individuals are still under the risk of developing the cardiovascular events (myocardial infarction, stroke).

### Thus, it is very important to find the vascular residual risk and to reduce it.

The elevated plasma TGs concentration is one of significant risk factor that should be treated. Because plasma TGs concentration varies during the 24 hours of each individual, it is very important to develop a test which can separate healthy individuals from those with postprandial hypertriglyceridaemia. Screening and intervention to allow early detection of undesirable postprandial TGs concentration is useful tool and cost effective, similarly to glucose tolerance test.

Nowadays there is ample of epidemiological data supporting the elevated fasting or non-fasting plasma triglyceride (TG) concentrations as an independent risk factor for cardiovascular disease.

For example, in the Framingham Heart Study, after a 30-year follow up, was found the association between the increased cardiac heart disease risk and elevated plasma fasting TG concentrations. Additionally, this association was more pronounced in women. Moreover, Hokanson and Austin evaluated association between plasma fasting TG concentrations and the incidence of vascular disease in 17 population-based prospective studies including men (n = 46413) and women (n = 10864). They found that even after correction for the contribution of high density lipoprotein (HDL) cholesterol, the fasting TGs remained independent predictors of vascular risk. In the Copenhagen City Heart Study 14000 Danish men and women were followed up for 26 years. In this study, nonfasting TGs were found to be associated with risk of cardiovascular events (for both sexes). Furthermore, the nonfasting TGs ≥ 440 mg/dl (5 mmol/l) predicted a 17 and 5 fold risk of myocardial infarction in women and men, respectively. In the Asia Pacific Cohort Studies Collaboration, nonfasting TGs were more powerful predictors of cardiovascular events. Thus, the European Atherosclerosis Society Consensus Panel, the American Heart Association Scientific Statement and the Expert Panel Statement (all entered PubMed few months ago) concluded that the current evidence base implicates elevated TGs (fasting and nonfasting), a marker of triglyceride-rich lipoproteins and their remnants, excess cardiovascular risk.

The elevation of plasma TG concentrations can be
- genetically determined (primary hypertriglyceridaemia)
- may be secondary to other diseases (secondary hypertriglyceridaemia)
- may be due to the drugs side effects or
- may be present after meals (postprandial hypertriglyceridaemia).

The elevation of plasma TGs (TG-rich lipoproteins) postprandially is mainly from intestinally-derived chylomicrons (transport dietary TGs and cholesterol from the site of absorption to peripheral cells) and hepatically-derived very low density lipoprotein (VLDL). TG-rich lipoproteins are heterogeneous consisting of chylomicrons, VLDLs and their remnants.

Physiologically, chylomicrons and VLDL remnants are rapidly removed from the circulation by a receptor-mediated process and are not converted into smaller, lower density particles. VLDLs secreted by the liver are not considered to be atherogenic in normal subjects. In the hypertriglyceridaemic state (transient circulation and accumulation in plasma of particles, notably chylomicrons, VLDLs and their remnants), the rate of cholesterylester transfer from HDL to VLDL is elevated resulting in the secretion of large VLDL particles and the formation of small dense LDL particles, which are removed by scavengers (non-LDL receptor-mediated pathway) as well as by lipoprotein lipase mediated selective uptake requiring cell surface proteoglycans. The small dense LDL particles have proatherogenic properties such as, increased arterial wall retention and increased susceptibility to oxidation.

The main lipid abnormality found in blood postprandially is hypertriglyceridaemia. The magnitude of the postprandial response appears to play a role in the aetiology and progression of coronary heart disease.

Typically, the daily pattern of meals is about 3-4 meals/day and each meal can contain 20-40g of fat, thus we can assume that circulating TGs are maintained above fasting concentrations for most of the 24 period. Additionally, the TGs response after a second, third or fourth meal is more exaggerated since they are beginning with already elevated TG values from the previous meal(s).

Therefore, it is important to evaluate any TG metabolism pathology.

Especially that dietary fat (eg, 70 to 100 g) may affect saturation parameters and impede hepatic removal of circulating chylomicrons thereby permitting their uptake and incorporation by macrophages. Furthermore, the usefulness of measuring nonfasting TGs is now supported by many studies (Women's Health Study, the Copenhagen City Heart Study, the Physicians Health Study, the Apolipoprotein-related Mortality Risk Study, the second Northwick Park Heart Study, and the Norwegian Study).

Although, the present guidelines suggest to measure plasma TG concentration in fasting and nonfasting state, there is no broad agreement what should be measured postprandially. A nonfasting measurement is a measurement taken at any time within up to 8-14 hours after any usual meal, while a postprandial measurement is a measurement taken at a specific time after consuming standardized fat tolerance test. The plasma TG concentration is a nondiscriminatory marker of all TG-carrying lipoproteins which are spread over a broad range of size and density. Many studies measured plasma TG concentrations, others measured chylomicrons (labeling them with retinyl palmitate), intermediate density lipoproteins concentration, apolipoprotein AIV, remnant like particles (with an immunochemical method which recognizes all apolipoprotein B-100 containing lipoproteins except for those that are apolipoprotein E enriched) and a remnant-like emulsion breath test. However, each approach has its limitations.

In 1979 Zilversmit first hypothesized that atherogenesis is a postprandial phenomenon and he pointed out the need to investigate the fate of TG levels after a fat meal. Noteworthy to mention that the increased plasma TGs concentration postprandially occurs in patients with
● coronary heart disease and conditions associated with an increased risk of vascular disease such as
● hypertension
● obesity
● metabolic syndrome
● familial hypercholesterolaemia
● diabetes mellitus and
● menopause.

Postprandial lipid intolerance is also seen in smokers, even with normal fasting TG levels; this may contribute to increased vascular risk in smokers.

Therefore, so far there has been a significant problem of incomplete and insufficient diagnosis of elevated plasma triglyceride levels, due to the continuous change of triglyceride levels postprandially. This postprandial elevation of triglycerides cannot be diagnosed or is undermined by the measurement of fasting triglyceride levels. Early diagnosis of people with postprandial hypertriglyceridemia (similar to the Glucose tolerance test in people with pre-diabetes) can protect the patient from cardiovascular events.

### The early information about elevated blood triglycerides levels is provided by the Fat Tolerance Test or, more specifically by the Triglyceride Tolerance Test (TTT)

Until today, several discrepancies exist concerning the composition of the meal that needs to be given to make an accurate Triglyceride Tolerance Test **(TTT)**, as well as concerning the time of measurement of triglyceride levels after a meal.

Thus, it is very important to establish:
The time-point that the blood sample has to be drown, and the amount of fat incorporated in the triglyceride tolerance test **(TTT)** that should be consumed.

The time interval of TGs measurement after a meal was not standardized until now. Some authors measured TGs concentration after consumption of the fatty meal every 1 h, others every 2 h and others every 3 h; for as long as 8-10 hours. This lead patients to stay in the clinic for all these hours and to undergo multiple blood draws for lipid measurements, resulting in patient discomfort and higher cost.

In the Copenhagen City Heart Study was found that peak TGs were observed 4 h after the last meal, the same time frame for which the maximal predictive value was observed in the Women's Health Study data. An adequate measurement format seems to include blood collection at 4 hours.

### The most convenient for measuring TGs concentration after the TTT is 4 hours, which was also confirmed by a meta-analysis of 113 studies evaluated postprandial triglyceridaemia.

Another very important issue is the amount of incorporated fat in the test meals. Almost every researcher introduced his own 'standardised meal' with variable contents of fat, carbohydrate and proteins. Going through the research articles published in the last 2 decades the difference in the amount and type of fat in test meals is varying. For example, in one study was given 30g of butter, in other 30g of 3 different oils, in other 50g fat plus glucose, 175ml of heavy whipping cream, in other 20% intralipid, in other 2 muffins (each containing 25g fat) and a milkshake and in other ice cream with 83.5% of fat.

### The same meta-analysis demonstrates an ideal standard meal that contains 75g of saturated fat, 25g carbohydrates and 10g protein.

Based on all the above, we have defined one postprandial measurement of total TGs that is taken at a fixed time point 4 h after a standardised triglyceride tolerance test (TTT). Therefore, by measuring postprandially plasma, total TG concentration will be convenient, cheap and provide sufficient information for clinicians.

### III. DETAILED DESCRIPTION OF THE INVENTION

The trade TTT meal of the present invention consists of 75g saturated fat, 25g carbohydrates and 10g proteins and is produced in the form of powder, which will be reconstituted in the addition of water in TTT meal. The precise nutritional information of the above mentioned TTT meal is as follows:

| | |
|---|---|
| Hydrogenated vegetable fats | 62% |
| Glucose syrup solids | 13.9% |
| Milk proteins | 8% |
| Sucrose | 7.1% |
| Emulsifiers: lactic acid and acetic acid esters of mono- and diglycerides of fatty acids | 3.7% |
| Defatted cocoa powder (10-12 fat content) | 2.6% |
| Cocoa powder (20-22% fat content) | 2.5% |
| Flavours | 0.2% |

The above ingredients are all dry mixed together in order to form the dry mix of the TTT meal and the final dry mix is packed in bags, sachets, bags in a box, plastic tubs or any other known package type.

The TTT meal comprising the above ingredients is prepared according to the following preparation process: 115 gr of the dry mix is added in a mixer with ml 150 ml of water and stirred well until all the powder is dissolved.

The nutritional information of the above mention TTT meal is the following

| | Per 100g of product | Per 115g of product | Per 100g of ready product * | Per Portion 265g of ready product * |
|---|---|---|---|---|
| Energy | 722kcal (2984kJ) | 832kcal (3439kJ) | 314kcal(1296kJ ) | 832kcal (3439kJ) |
| Proteins | 8.7g | 10g | 3.8g | 10g |
| Carbohydrates | 21.7g | 25.0g | 9.4g | 25.0g |
| Sugars | 12.4g | 14.3g | 5.4g | 14.3g |
| Fat | 66.3g | 76.4g | 28.8g | 76.4g |
| Saturates | 65.1g | 75.0g | 28.3g | 75.0g |
| Dietary fiber | 1.8g | 2.1 | 0.8g | 2.1 |
| Sodium | 0.05g | 0.06g | 0.02g | 0.06g |

| A Portion of 265g contains: | | | | |
|---|---|---|---|---|
| Calories | Sugars | Fat | Saturates | Sodium |
| 832 | 14.3g | 76,4g | 75g | 0,06g |
| 42% | 16% | 109% | 375% | 3% |
| *GDA (Guideline Daily Amount): based on 2000 calorie diet corresponding to the average daily requirement of an adult | | | | |

| | | | | |
|---|---|---|---|---|
| *This information is based on product made up according to instructions using 115gr of TTT Meal and 150ml of water. | | | | |

The TTT meal is an easily administered meal, in dry powdered form that has to be mixed with water that consists of standardized amounts of fat, carbohydrates and proteins, which, when consumed, will give a evaluable fat-curve, without necessitating the hospitalization of the patient.

Furthermore, the proposed TTT meal has many advantages from both a medical as well as a market side,

In particular, the proposed precise concentrations of fat, carbohydrates and lipids in TTT meal is imitating the prandial fat intake, which, according to the metaanalysis, is the ideal intake, in order for the result of the triglyceride test 4 hours after the consumption of the drink to be fully evaluable.

The TTT meal is eligible to provide very important information, without the need for the patient to be hospitalized, while, in addition it minimizes the risk of an underestimation or overestimation of the Triglyceride Tolerance Test if the nutritional ingredients analogy is not the proposed as such.

In addition, it is important to note that, while the TTT is a mere mix of nutritional ingredients (as the glucose tolerance test drink) and due to the fact that production thereof in a microbiological laboratory or production by the patient himself is practically impossible, the novelty of producing the meal in powder form is most probably the only way that the examination becomes accessible to the society.

The production of the standardized TTT meal, which will be provided to the patient in the form of powder, and will be administered after the addition of water in the form of drink or mousse, has the following advantages:
(a) The standardization of the concentration of fats, carbohydrates and proteins that is will contain are the optimum for conducting a fat- curve (while during the clinical studies the accurate production of the meal was highly difficult, and the concentrations in the final product deviated from the optimum)
(b) The risk of deterioration of the meal, which in its physical state is a very good medium for infectious agents and contaminants, is minimized
(c) It is easily produced and distributed
(d) Does not necessitate the hospitalization of the patient
(e) The patient can easily consume it in order to do the TTT

### IV. CLAIMS

1. TTT meal is a diagnostic meal that contains standardized proportion of 75 gr saturated fat, 25 gr of carbohydrates and 10 gr of proteins.
2. TTT meal according to claim 1 is characterized by a powder form.
3. TTT meal according to claims 1 and 2 is characterized by the fact that it can be dissolved in water to form a drink or mousse that the patient can consume directly
4. TTT meal according to claims 1, 2 and 3 is a sweet or savory meal/mousse

### SCHEDULE A [References]

1. ESC/EAS Guidelines for the management of dyslipidaemias: the Task Force for the management of dyslipidaemias of the European Society of Cardiology (ESC) and the European Atherosclerosis Society (EAS). European Association for Cardiovascular Prevention & Rehabilitation, Reiner Z, et al. Eur Heart J. 2011 Jul;32(14):1769-818.
2. Miller M, et al. Triglycerides and cardiovascular disease: a scientific statement from the American Heart Association. Circulation. 2011 May 24;123(20):2292-333.
3. Kolovou GD, Mikhailidis DP, Kovar J, Lairon D, Nordestgaard BG, Ooi TC, Perez-Martinez P, Bilianou H, Anagnostopoulou K, Panotopoulos G. Assessment and clinical relevance of non-fasting and postprandial triglycerides: an expert panel statement. Curr Vasc Pharmacol. 2011 May;9(3):258-70.
4. Olefsky JM, Crapo P, Reaven GM. Postprandial plasma triglyceride and cholesterol responses to a low-fat meal. Am J Clin Nutr 1976; 29: 535-9.
5. Berr F. Characterization of chylomicron remnant clearance by retinyl palmitate label in normal humans. J Lipid Res. 1992;33:915-930.
6. Talmud PJ, Hawe E, Miller GJ, Humphries SE. Nonfasting apolipoprotein B and triglyceride levels as a useful predictor of coronary heart disease risk in middle-aged UK men. Arterioscler Thromb Vasc Biol 2002; 22: 1918-23.
7. Walldius G, Jungner I, Kolar W, Holme I, Steiner E. High cholesterol and triglyceride values in Swedish males and females: increased risk of fatal myocardial infarction. First report from the AMORIS (Apolipoprotein related Mortality RISk) study. Blood Press Suppl 1992; 4: 35-42.
8. Waterworth DM, Talmud PJ, Bujac SR, Fisher RM, Miller GJ, Humphries SE. Contribution of apolipoprotein C-III gene variants to determination of triglyceride levels and interaction with smoking in middle-aged men. Arterioscler Thromb Vasc Biol 2000; 20: 2663-9.
9. Graff-Iversen S, Stensvold I, Lund-Larsen PG, Nodarse LO, Tverdal A, Urdal P. Serum lipids in postmenopausal or perimenopausal women using estrogen alone, estrogen with levonorgestrel, or estrogen with norethisterone, compared with nonusers: results from a cross-sectional study in two Norwegian counties 1985-1988. J Clin Epidemiol 1998; 51: 1311-6.
10. Stensvold I, Tverdal A, Urdal P, Graff-Iversen S. Non-fasting serum triglyceride concentration and mortality from coronary heart disease and any cause in middle aged Norwegian women. BMJ 1993; 307: 1318-22.
11. Kishimoto Y, Tani M, Uto-Kondo H, Saita E, Iizuka M, Sone H, Yokota K, Kondo K Effects of magnesium on postprandial serum lipid responses in healthy human subjects. Br J Nutr. 2010; 103: 469-72.100.
12. Maki KC, Mustad V, Dicklin MR, Geohas J. Postprandial metabolism with 1,3-diacylglycerol oil versus equivalent intakes of long-chain and medium-chain triacylglycerol oils. Nutrition 2009; 25: 627-33.
13. van Oostrom AJ, Alipour A, Sijmonsma TP, Verseyden C, Dallinga-Thie GM, Plokker HW, Castro Cabezas M. Comparison of different methods to investigate postprandial lipaemia. Neth J Med 2009; 67: 13-20.
14. Perez-Martinez P, Corella D, Shen J, Arnett DK, Yiannakouris N, Tai ES, Orho-Melander M, Tucker KL, Tsai M, Straka RJ, Province M, Kai CS, Perez-Jimenez F, Lai CQ, Lopez-Miranda J, Guillen M, Parnell LD, Borecki I, Kathiresan S, Ordovas JM. Association between glucokinase regulatory protein (GCKR) and apolipoprotein A5 (APOA5) gene polymorphisms and triacylglycerol concentrations in fasting, postprandial, and fenofibrate-treated states. Am J Clin Nutr 2009; 89: 391-9.
15. Patel S, Puranik R, Nakhla S, Lundman P, Stocker R, Wang XS, Lambert G, Rye KA, Barter PJ, Nicholls SJ, Celermajer DS. Acute hypertriglyceridaemia in humans increases the triglyceride content and decreases the anti-inflammatory capacity of high density lipoproteins. Atherosclerosis 2009; 204: 424-8.
16. Berry SE, Miller GJ, Sanders TA. The solid fat content of stearic acid-rich fats determines their postprandial effects. Am J Clin Nutr 2007; 85: 1486-94.
17. Kolovou GD, Anagnostopoulou KK, Damaskos DS, Mihas C, Mavrogeni S, Hatzigeorgiou G, Theodoridis T, Mikhailidis DP, Cokkinos DV. Gender influence on postprandial lipemia in heterozygotes for familial hypercholesterolemia. Ann Clin Lab Sci 2007; 37: 335-42.

## Claims

1. TTT meal is a diagnostic meal that contains standardized proportion of 75 gr saturated fat, 25 gr of carbohydrates and 10 gr of proteins.

2. TTT meal according to claim 1 is **characterized by** a powder form.

3. TTT meal according to claims 1 and 2 is **characterized by** the fact that it can be dissolved in water to form a drink or mousse that the patient can consume directly

4. TTT meal according to claims 1, 2 and 3 is a sweet or savory meal/mousse.
